# EUROPÄISCHE PATENTANMELDUNG

(11) **EP 4 595 739 A1**
(43) Veröffentlichungstag der Anmeldung: **06.08.2025**
(21) Anmeldenummer: 24217473.8
(22) Anmeldetag: 04.12.2024
(51) Int. Cl.: A01D 43/08, A01F 29/22

(54) **SELBSTFAHRENDER FELDHÄCKSLER MIT EINER INDUKTIVEN ERFASSUNGSANORDNUNG**

(30) Priorität: 30.01.2024 DE 102024102590
(71) Anmelder: CLAAS Selbstfahrende Erntemaschinen GmbH, 33428 Harsewinkel (DE)
(72) Erfinder: Neitemeier, Dennis, 59510 Lippetal (DE); Cord-Kruse, Christian, 48231 Warendorf (DE); Klein Helmkamp, Marwin, 49080 Osnabrück (DE); Bönig, Ingo, 33330 Gütersloh (DE); Wehner, Gregor, 88356 Ostrach Unterweiler (DE); Eggenhaus, Georg, 48369 Saerbeck (DE); Witte, Johann, 58730 Fröndenberg (DE); Goeres, Thomas, 33428 Harsewinkel (DE); Hinz, Patrick, 33428 Greffen (DE); Belau, Sven Carsten, 33332 Gütersloh (DE); Spachtholz, Christian, 88370 Ebenweiler (DE)
(74) Vertreter: CLAAS Gruppe

(57) **Zusammenfassung**

Die vorliegende Erfindung betrifft eine als selbstfahrenden Feldhäcksler (2) ausgeführte landwirtschaftliche Arbeitsmaschine (1) zum Aufnehmen, Bearbeiten und Weiterleiten von Erntegut. Dieser Feldhäcksler (2) weist eine Häckseleinrichtung (6) zum Zerkleinern des aufgenommenen Ernteguts auf, wobei die Häckseleinrichtung (6) ein Trommelgehäuse (31) umfasst, in dem eine Häckseltrommel (7) und mehrere Häckselmesser (8) angeordnet sind, wobei diese Häckselmesser (8) lösbar, insbesondere auswechselbar, an der Häckseltrommel (7) angeordnet sind. Ferner umfasst der Feldhäcksler (2) eine induktive Erfassungsanordnung (25) zur Zustandserfassung der Häckseleinrichtung (6).

Die vorliegende Erfindung beruht auf dem allgemeinen Gedanken, dass aus den Messwerten der induktiven Erfassungsanordnung (25) unter Berücksichtigung einer Störgrößenkompensation ein Messerzustand der Häckselmesser (8) ermittelt wird, der die Grundlage für die Ermittlung der erforderlichen Schleifzyklen der Häckselmesser (8) bildet.

## Beschreibung

Die vorliegende Erfindung betrifft eine als selbstfahrender Feldhäcksler ausgeführte landwirtschaftliche Arbeitsmaschine zum Aufnehmen, Bearbeiten und Weiterleiten von Erntegut. Dieser Feldhäcksler weist eine Häckseleinrichtung zum Zerkleinern des aufgenommenen Ernteguts auf, wobei die Häckseleinrichtung ein Trommelgehäuse umfasst, in dem eine Häckseltrommel und mehrere Häckselmesser angeordnet sind, wobei diese Häckselmesser lösbar, insbesondere auswechselbar, an der Häckseltrommel angeordnet sind. Ferner umfasst der Feldhäcksler eine induktive Erfassungsanordnung zur Zustandserfassung der Häckseleinrichtung.

Aus der DE 10 2017 103 537 ist eine Sensoranordnung bekannt, die mittels induktiver Sensoren die umlaufenden Messer einer Häckseltrommelanordnung detektiert und aus dem ermittelten magnetischen Fluss einen Verschleißzustand der Häckselmesser ableitet, wobei sich der Verschleiß aus der jeweils induzierten Spannung ergibt.

Der Verschleißzustand der Häckselmesser ist ein wichtiger Parameter, wobei jedoch die induzierte Spannung äußeren Einflussfaktoren ausgesetzt ist, die den Parameter stark beeinflussen, sodass nicht erforderliche und/oder verspätete Schleifungen der Häckselmesser vorgenommen werden. Solche unnötigen Schleifungen der Häckselmesser unterbrechen den Ernteprozess und erhöhen die Betriebskosten des Feldhäckslers, da u.a. die Nutzungsdauer der Häckselmesser aufgrund der unnötigen Schleifungen stark reduziert wird.

Der vorliegenden Erfindung liegt die Aufgabe zugrunde, eine derart verbesserte Ausführungsform des selbstfahrenden Feldhäckslers anzugeben, dass nicht erforderliche Schleifzyklen reduziert, insbesondere vermieden, werden und erforderliche Schleifzyklen zeitpassend durchgeführt werden können.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass aus den Messwerten der induktiven Erfassungsanordnung unter Berücksichtigung einer Störgrößenkompensation ein Messerzustand der Häckselmesser ermittelt wird, der die Grundlage für die Ermittlung der erforderlichen Schleifzyklen der Häckselmesser bildet.

Der erfindungsgemäße selbstfahrende Feldhäcksler umfasst einen Erntevorsatz zur Aufnahme von Erntegut und die Häckseleinrichtung zum Zerkleinern des aufgenommenen Ernteguts. Die Häckseleinrichtung weist ein Trommelgehäuse auf, in dem eine Häckseltrommel und mehrere Häckselmesser angeordnet sind, wobei die Häckselmesser lösbar, insbesondere auswechselbar, mit der Häckseltrommel verbunden sind. Zusätzlich ist an dem Trommelgehäuse eine Messerschleifeinrichtung mit einem Schleifstein zur Schleifung der Häckselmesser ausgebildet. Die Messerschleifeinrichtung kann derart ausgebildet sein, dass deren Schleifstein horizontal über die Breite der Häckseltrommel bewegbar ist, sodass jedes an der Häckseltrommel positionierte Häckselmesser schleifbar ist.

Zusätzlich weist der selbstfahrende Feldhäcksler eine induktive Erfassungsanordnung zur Erfassung eines Parameters bezüglich der Häckseleinrichtung auf, die am Trommelgehäuse der Häckseleinrichtung angeordnet sein kann. Diese induktive Erfassungsanordnung ist zur Erfassung von Messwerten bezüglich der Häckselmesser ausgebildet. Weitere Details bezüglich dieser induktiven Erfassungsanordnung ergeben sich aus der DE 10 2019 112 968 A1, auf deren Offenbarungsgehalt hiermit vollumfänglich Bezug genommen wird.

Eine Einstellvorrichtung ist zur Einstellung des Feldhäckslers vorgesehen, wobei die Einstellvorrichtung kommunizierend mit der induktiven Erfassungsanordnung und/oder mit der Messerschleifeinrichtung verbunden ist. Zwecks einer Aktivierung oder Deaktivierung eines Messerschleifvorganges ist die Messerschleifeinrichtung kommunizierend mit der Einstellvorrichtung verbunden. Zwecks einer Aktivierung oder Deaktivierung einer Parametererfassung ist die induktive Erfassungsanordnung kommunizierend mit der Einstellvorrichtung verbunden. Außerdem ist die induktive Erfassungsanordnung mit der Einstellvorrichtung für den Austausch des erfassten Parameters kommunizierend verbunden.

Die Einstellvorrichtung kann als Steuer- und/oder Regelvorrichtung ausgebildet sein, die eine Einstellung durch eine Steuerung und/oder Regelung des selbstfahrenden Feldhäckslers, insbesondere von Komponenten, insbesondere des Vorsatzgerätes und/oder der Arbeitsaggregate und/oder der induktiven Erfassungsanordnung und/oder der Messerschleifeinrichtung, des selbstfahrenden Feldhäckslers, bewirkt. Die Einstellvorrichtung kann eine Recheneinheit, insbesondere eine computerbasierte Recheneinheit, und einen Datenspeicher, insbesondere einen computerlesbaren Datenspeicher, aufweisen.

Unter einer kommunizierenden Verbindung kann zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Die kommunizierende Verbindung kann insbesondere kabellos und/oder drahtlos ausgebildet sein.

Die Einstellvorrichtung ist dazu vorgesehen und eingerichtet, insbesondere dazu ausgebildet und/oder programmiert, aus den Messwerten der induktiven Erfassungsanordnung unter Berücksichtigung einer Störgrößenkompensation einen Messerzustand der Häckselmesser zu ermitteln. Hierdurch wird Störgrößen, die einen großen Einfluss auf die Messwerte haben, aktiv entgegengewirkt, sodass der Messerzustand, insbesondere der Verschleißzustand, der Häckselmesser sicherer und realitätsnäher erfasst wird.

Die Einstellvorrichtung ist dazu vorgesehen und eingerichtet, den Messerschleifvorgang in Abhängigkeit des störgrößenkompensierten Messerzustandes bezüglich der Häckselmesser zu aktivieren oder zu deaktivieren. Somit werden unnötige Schleifungen der Häckselmesser, die den Ernteprozess unterbrechen, verhindert. Außerdem wird die Lebensdauer der Häckselmesser durch die Vermeidung unnötiger Schleifvorgänge erhöht, sodass die erforderlichen Betriebskosten des Feldhäcksler reduziert werden.

Bei einer vorteilhaften Weiterbildung der erfindungsgemäßen Lösung ist vorgesehen, dass die Störgrößenkompensation in Abhängigkeit sensorisch erfasster Störgrößen bezüglich der Häckseleinrichtung erfolgt. Die sensorisch erfassten Störgrößen können sich auf Störgrößen innerhalb der Häckseleinrichtung und/oder außerhalb der Häckseleinrichtung beziehen. Die Störgrößen können je nach Betriebssituation des selbstfahrenden Feldhäckslers unterschiedlich vorhanden sein.

Bei einer vorteilhaften Weiterbildung der erfindungsgemäßen Lösung ist vorgesehen, dass die Störgröße, die bei der Ermittlung des Messerzustandes der Häckselmesser kompensiert wird, eine Drehzahlschwankung der Häckseltrommel der Häckseleinrichtung ist. Eine Drehzahlschwankung kann eine seitens der Einstellvorrichtung ungeplante, insbesondere eine außerhalb eines vorgegebenen Toleranzbereiches liegende, Drehzahl der Häckseltrommel der Häckseleinrichtung sein.

Bei einer vorteilhaften Weiterbildung der erfindungsgemäßen Lösung ist vorgesehen, dass die Störgröße, die bei der Ermittlung des Messerzustandes der Häckselmesser kompensiert wird, eine Verwindung der Häckseleinrichtung ist. Diese Verwindung der Häckseleinrichtung kann aufgrund einer Mitnahme von Häckselgut durch die Häckseltrommel und/oder eine Umwickelung der Häckseltrommel, insbesondere der Häckselmesser, durch die Mitnahme des Häckselguts vorkommen.

Eine Temperaturerhöhung der Häckseleinrichtung führt beispielsweise zu einer Reduktion des eingesetzten Magnetfeldes der induktiven Erfassungsanordnung, obwohl die Häckseleinrichtung, insbesondere die Häckselmesser, ggf. keine Verschlechterung aufweisen. Daher ist bei einer vorteilhaften Weiterbildung der erfindungsgemäßen Lösung vorgesehen, dass die Störgröße, die bei der Ermittlung des Messerzustandes der Häckselmesser kompensiert wird, eine Temperatur der Häckseleinrichtung, insbesondere innerhalb der Häckseleinrichtung, ist.

Bei einer vorteilhaften Weiterbildung der erfindungsgemäßen Lösung ist vorgesehen, dass die Störgröße, die bei der Ermittlung des Messerzustandes der Häckselmesser kompensiert wird, eine Temperatur der Häckseltrommel und/oder der Häckselmesser ist.

Bei einer vorteilhaften Weiterbildung der erfindungsgemäßen Lösung ist vorgesehen, dass die Einstellvorrichtung dazu vorgesehen und eingerichtet ist, für die Störgrößenkompensation aus mehreren Messwerten der induktiven Erfassungsanordnung eine, insbesondere eine einzige, Kenngröße zu generieren, die eine reduzierte Abhängigkeit von den Störgrößen aufweist. Typischerweise entsprechen die Messwerte einem sinusartigen Signal, wobei es schwierig bei vorhandenen Störgrößen ist, z.B. das realistische Maximum in diesem sinusartigen Signal zu ermitteln. Daher kann anstatt eines Maximums erfindungsgemäß das zeitliche Integral des sinusartigen Signals bezüglich einer vordefinierten Zeitspanne als Kenngröße ermittelt werden, wobei diese Kenngröße im Vergleich zu einem Maximalwert eine geringere Schwankungsstärke aufgrund der vorhanden Störgrößen aufweist.

Bei einer vorteilhaften Weiterbildung der erfindungsgemäßen Lösung ist vorgesehen, dass die Einstellvorrichtung dazu vorgesehen und eingerichtet ist, die Erfassung der Messwerte mittels der induktiven Erfassungsanordnung in vergleichbaren, insbesondere identischen, Betriebssituationen des selbstfahrenden Feldhäckslers durchzuführen, insbesondere nacheinander durchzuführen. In vergleichbaren Betriebssituationen kann der selbstfahrende Feldhäcksler identische Einstellungen mittels der Einstellvorrichtung aufweisen. Beispielsweise kann die Drehzahl des Antriebsmotors und/oder der Zustand der Arbeitsaggregate, insbesondere des Vorsatzgerätes, vergleichbar sein. Hierbei werden vergleichbare Erntesituationen verwendet, um Änderungen an den Häckselmessern festzustellen.

Bei einer vorteilhaften Weiterbildung der erfindungsgemäßen Lösung ist vorgesehen, dass die Häckseleinrichtung ein lösbar angeordnetes Verschleißblech zum Schutz der induktiven Erfassungsanordnung aufweist. Das Verschleißblech kann aus nicht ferromagnetischen Werkstoff, insbesondere Aluminium, Edelstahl, usw., ausgebildet sein. Hierdurch wird die induktive Erfassungsanordnung vor Fremdkörperschäden geschützt und zusätzlich ist aufgrund der lösbaren, insbesondere auswechselbaren, Anordnung eine schnelle Demontage des Verschleißbleches möglich, wobei die Demontage des Verschleißbleches außerdem einen größeren Wartungszugang zur Messertrommel ermöglicht.

Bei einer vorteilhaften Weiterbildung der erfindungsgemäßen Lösung ist vorgesehen, dass die Häckseleinrichtung ein lösbar angeordnetes Verschleißblech zur Positionierung und/oder Halterung der induktiven Erfassungsanordnung aufweist. Das Verschleißblech kann derart ausgebildet sein, dass eine spielfreie und/oder enge Positionierung der induktiven Erfassungsanordnung zur Messertrommel ermöglicht wird und gleichzeitig die induktive Erfassungsanordnung mittels des Verschleißbleches vor Fremdkörpern geschützt wird. Durch diese Positionierung wird die Verschleißanfälligkeit der induktiven Erfassungsanordnung reduziert. Das Verschleißblech ist aus nicht ferromagnetischen Werkstoff, insbesondere Aluminium, Edelstahl, usw., ausgebildet. Die induktive Erfassungsanordnung ist mittels dem Verschleißblech derart an der Häckseleinrichtung angeordnet, dass kein mittels der induktiven Erfassungsanordnung erzeugtes magnetisches Feld das Trommelgehäuse, sondern lediglich das nächstliegende Häckselmesser durchsetzt. Somit könnte das Trommelgehäuse aus einem ferromagnetischen Werkstoff ausgebildet sein.

Bei einer vorteilhaften Weiterbildung der erfindungsgemäßen Lösung ist vorgesehen, dass das Trommelgehäuse der Häckseleinrichtung einen Trommelboden und eine Trommelrückwand aufweist, wobei das Verschleißblech lösbar an der Trommelrückwand angeordnet ist, wobei die induktive Erfassungsanordnung lösbar an dem Verschleißblech angeordnet ist. Das Verschleißblech wird durch eine formschlüssige und/oder spielfreie Fixierung am Trommelgehäuse befestigt. Über den Formschluss werden die auftretenden äußeren Belastungen übertragen, wodurch die notwendigen Befestigungselemente, wie erforderliche Schrauben, reduziert werden können. Durch eine solche formschlüssige und/oder spielfreie Befestigung des Verschleißbleches kann zudem die induktive Erfassungsanordnung möglichst toleranz- und vibrationsarm bezüglich der Messertrommel positioniert werden.

Bei einer vorteilhaften Weiterbildung der erfindungsgemäßen Lösung ist vorgesehen, dass das Trommelgehäuse zwei voneinander beabstandete Einschiebenasen und das Verschleißblech mehrere Klemmnasen, insbesondere drei Klemmnasen, für eine spielfreie Fixierung des Verschleißblechs am Trommelgehäuse aufweist.

Bei einer vorteilhaften Weiterbildung der erfindungsgemäßen Lösung ist vorgesehen, dass das Verschleißblech mit mehreren Schrauben, insbesondere vier Schrauben, lösbar mit dem Trommelgehäuse verbunden ist, und/oder wenigstens ein Demontagegewinde, insbesondere zwei Demontagegewinde, aufweist.

Bei einer vorteilhaften Weiterbildung der erfindungsgemäßen Lösung ist vorgesehen, dass wenigstens zwei Sensoranordnungen mittels dem Verschleißblech spielfrei an der Häckseleinrichtung angeordnet sind, wobei die Sensoranordnungen jeweils eine induktive Erfassungsanordnung ausbilden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Darstellung eines selbstfahrenden Feldhäckslers in Seitenansicht,
- Fig. 2: eine Detailansicht des Feldhäckslers nach Figur 1 mit einer induktiven Sensoranordnung,
- Fig. 3: ein Trommelgehäuse ohne Verschleißblech,
- Fig. 4: das Trommelgehäuse mit montierten Verschleißblech, jedoch ohne induktive Sensoranordnung, und
- Fig. 5: das Trommelgehäuse mit montierten Verschleißblech, wobei die induktive Sensoranordnung am Verschleißblech angeordnet ist.

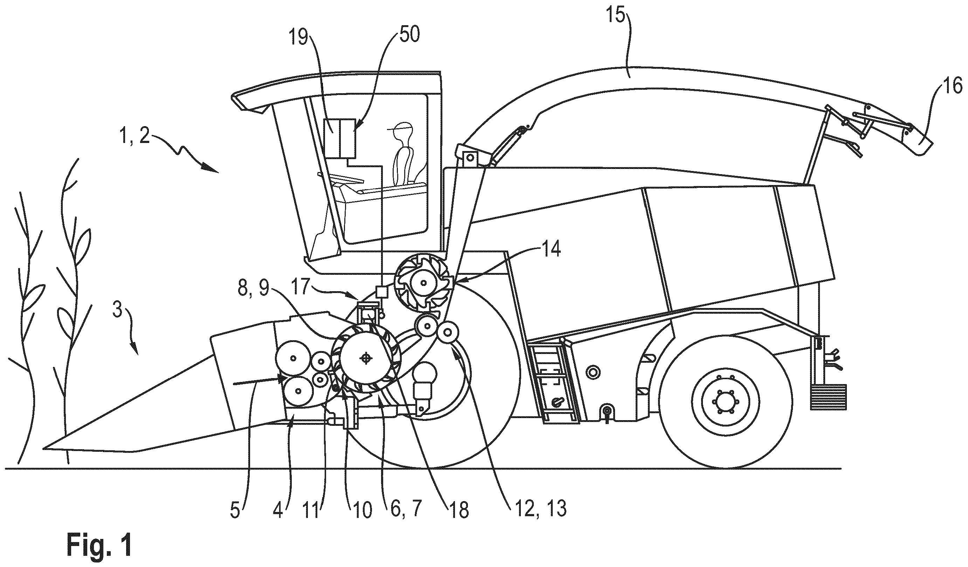

Die Fig. 1 zeigt schematisch eine als selbstfahrender Feldhäcksler 2 ausgeführte landwirtschaftliche Arbeitsmaschine 1, die in ihrem frontseitigen Bereich einen Erntevorsatz 3 aufnimmt. Im rückwärtigen Bereich des Erntevorsatzes 3 sind diesem sogenannte Einzugsund Vorpresswalzen 4 zugeordnet, die den Erntegutstrom 5 aus dem Erntevorsatz 3 kommend annehmen, verdichten und in ihrem rückwärtigen Bereich an eine Häckseleinrichtung 6 übergeben. Die Häckseleinrichtung 6 umfasst eine Häckseltrommel 7, die mit Häckselmessern 8 einer Häckselmesseranordnung 9 bestückt ist. Die umlaufenden Häckselmesser 8 werden im Einzugsbereich 10 der Häckseltrommel 7 an einer sogenannten Gegenschneide 11, über die der zu zerkleinernde Erntegutstrom 5 gefördert wird, vorbeibewegt.

Im rückwärtigen Bereich der Häckseltrommel 7 wird das zerkleinerte Erntegut 5 sodann entweder an eine als sogenannter Cracker 12 ausgeführte Nachzerkleinerungseinrichtung 13 oder direkt an eine Nachbeschleunigungseinrichtung 14 übergeben. Während die Nachzerkleinerungseinrichtung 13 die körnigen Bestandteile des Erntegutstromes 5, etwa Maiskörner, weiter zerkleinert beschleunigt der Nachbeschleuniger 14 den Erntegutstrom 5 in einer Weise, dass dieser durch einen Auswurfkrümmer 15 bewegt und endseitig im Bereich einer Auswurfklappe 16 aus dem Feldhäcksler 2 austreten und an ein nicht dargestelltes Transportfahrzeug übergeben werden kann. Zudem ist der Häckseltrommel 7 umfangseitig eine an sich bekannte und daher hier nicht im Detail beschriebene Messerschleifeinrichtung 17 zugeordnet, deren Schleifstein 18 horizontal über die Breite der Häckseltrommel 7 bewegbar ist, sodass jedes am Umfang der Häckseltrommel 7 positionierte Häckselmesser 8 schleifbar ist. Zwecks Aktivierung oder Deaktivierung des Messerschleifvorganges ist die Messerschleifeinrichtung 17 in signalübertragender Weise mit einer Einstellvorrichtung 19 verbunden.

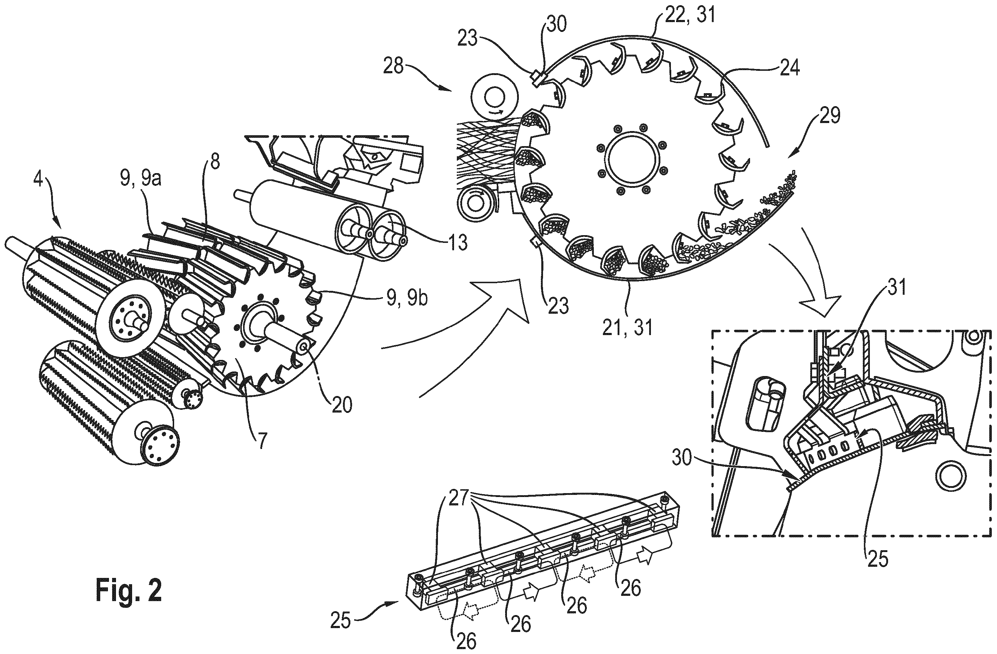

Gemäß Fig. 2 umfasst die Häckselmesseranordnung 9 rechts- und linksseitige Häckselmesseranordnungen 9a, 9b, wobei jede Häckselmesseranordnung 9a, 9b eine Vielzahl am Umfang der Häckseltrommel 7 schräg zur Drehachse 20 der Häckseltrommel 7 positionierte Häckselmesser 8 umfasst. Die Häckseltrommel 7 wird unterseitig von einem vorzugsweise aus Edelstahl bestehenden Trommelboden 21 ummantelt. Oberseitig wird die Häckseltrommel 7 von einer vorzugsweise ebenfalls aus Edelstahl bestehenden Trommelrückwand 22 umschlossen. Die Trommelrückwand 22 und der Trommelboden 21 bilden das Trommelgehäuse 31 aus.

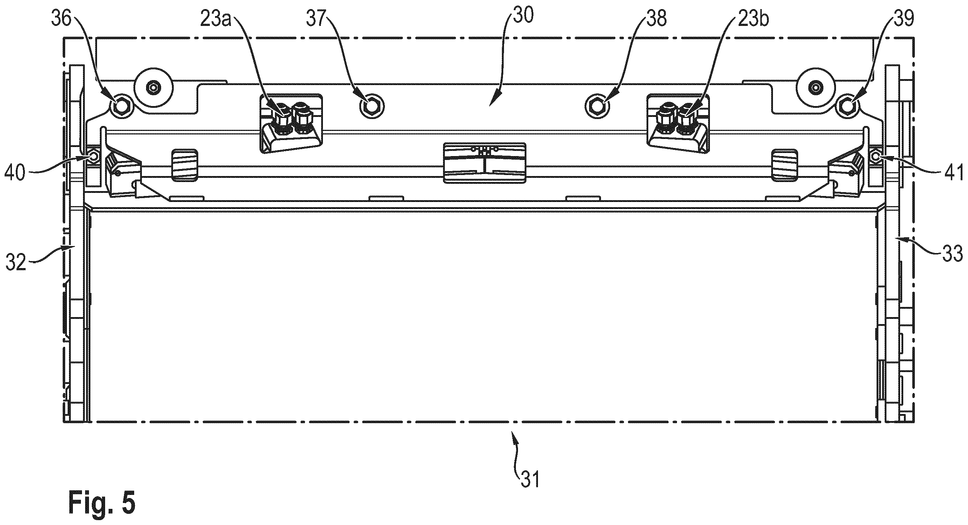

Eine Sensoranordnung 23 kann gemäß dem in der Fig. 2 dargestellten Ausführungsbeispiel entweder an der Trommelrückwand 22 oder am Trommelboden 21 positioniert sein. Es ist auch denkbar, dass zugleich sowohl am Trommelboden 21 als auch an der Trommelrückwand 22 eine Sensoranordnung 23 angeordnet ist. Unabhängig von der konkreten Positionierung sind jeder Häckseltrommel 7 zumindest zwei Sensoranordnungen 23a, 23b in der Weise zugeordnet, wie es in der Fig. 5 dargestellt ist, dass jeweils eine der Sensoranordnungen 23a, 23b der jeweils zugehörigen Häckselmesseranordnung 9a, 9b zugeordnet ist, wobei jede Sensoranordnung 23a, 23b die Schneidkante 24 des jeweiligen Häckselmessers 7 vollständig überdeckt, sodass jede Schneidkante 24 über ihrer gesamten Länge durch die jeweilige Sensoranordnung 23a, 23b detektiert werden kann. Weiter liegt es im Rahmen der Erfindung, dass die jeweilige Sensoranordnung 23a, 23b entweder parallel zur Drehachse 20 der Häckseltrommel 7 oder parallel zur Schneidkante 24 der Häckselmesser 8 am Trommelboden 21 und/oder der Trommelrückwand 22 positioniert ist. Vorzugsweise werden alle Sensoranordnungen 23a, 23b entweder parallel zur Drehachse 20 der Häckseltrommel 7 oder parallel zur Schneidkante 24 der Häckselmesser 8 positioniert sein.

Im dargestellten Ausführungsbeispiel der Fig. 2 sind die Sensoranordnungen 23 als induktive Erfassungsanordnungen 25 ausgeführt, wobei jede Sensoranordnung 23 ein oder mehrere magnetische Erregeranordnungen 26 sowie jeweils eine mit diesen zusammenwirkende Polanordnung 27 umfasst. Diese induktive Erfassungsanordnung 25 ist zur Erfassung von Messwerten bezüglich der Häckselmesser 8 vorgesehen und ausgebildet. Weitere Details bezüglich der induktiven Erfassungsanordnungen 25 ergeben sich aus der DE 10 2019 112 968 A1, auf deren Offenbarungsgehalt hiermit vollumfänglich Bezug genommen wird.

Erfindungsgemäß ist die Einstellvorrichtung 19 dazu vorgesehen und eingerichtet, aus den Messwerten der induktiven Erfassungsanordnung 25 unter Berücksichtigung einer Störgrößenkompensation einen Messerzustand der Häckselmesser 8 zu ermitteln, wobei die Störgrößenkompensation in Abhängigkeit sensorisch erfasster Störgrößen bezüglich der Häckseleinrichtung 6 erfolgt. Wie in der Fig. 1 angedeutet, weist der selbstfahrende Feldhäcksler 2 innerhalb einer Fahrerkabine eine Anzeigeeinheit 50 auf, wobei die Einstellvorrichtung 19 dazu eingerichtet sein kann, einen optischen und/oder akustischen Hinweis für einen Fahrer des Feldhäckslers 2 mittels der Anzeigeeinheit 50 bezüglich des störgrößenkompensierten Messerzustandes der Häckselmesser 8 zu initiieren.

Die Störgröße, die bei der Ermittlung des Messerzustandes der Häckselmesser 8 kompensiert wird, kann eine sensorisch erfasste Drehzahlschwankung der Häckseltrommel 7 der Häckseleinrichtung 6 sein. Alternativ oder zusätzlich kann die Störgröße, die bei der Ermittlung des Messerzustandes der Häckselmesser 8 kompensiert wird, eine sensorisch erfasste Verwindung der Häckseleinrichtung 6 sein. Eine Verwindung der Häckseleinrichtung 6 kann durch eine Mitnahme von Häckselgut durch die Häckseltrommel 7 und/oder eine Umwickelung der Häckseltrommel 7, insbesondere der Häckselmesser 8, durch die Mitnahme des Häckselguts auftreten. Alternativ oder zusätzlich kann die Störgröße, die bei der Ermittlung des Messerzustandes der Häckselmesser 8 kompensiert wird, eine sensorisch erfasste Temperatur der Häckseleinrichtung 6, insbesondere innerhalb der Häckseleinrichtung 6, sein. Insbesondere kann die Störgröße, die bei der Ermittlung des Messerzustandes der Häckselmesser 8 kompensiert wird, eine sensorisch erfasste Temperatur der Häckseltrommel 7 und/oder der Häckselmesser 8 sein.

Ferner kann die Einstellvorrichtung 19 dazu vorgesehen und eingerichtet sein, für die Störgrößenkompensation aus mehreren Messwerten der induktiven Erfassungsanordnung 25 eine Kenngröße zu generieren, die eine reduzierte Abhängigkeit von den Störgrößen aufweist. Typischerweise entsprechen die reinen Messwerte einem sinusartigen Signal, wobei es schwierig bei vorhandenen Störgrößen ist, z.B. das realistische Maximum in diesem sinusartigen Signal zu ermitteln. Daher kann anstatt eines Maximums erfindungsgemäß das zeitliche Integral des sinusartigen Signals bezüglich einer vordefinierten Zeitspanne als Kenngröße ermittelt werden, wobei diese Kenngröße im Vergleich zu einem Maximalwert eine geringere Schwankungsstärke aufgrund der ggf. vorhandenen Störgrößen aufweist.

Die Einstellvorrichtung 19 kann dazu eingerichtet sein, die Erfassung der Messwerte mittels der induktiven Erfassungsanordnung 25 in vergleichbaren, insbesondere identischen, Betriebssituationen des selbstfahrenden Feldhäckslers 2 durchzuführen. Beispielsweise kann die Drehzahl des Antriebsmotors und/oder der Zustand der Arbeitsaggregate, insbesondere des Vorsatzgerätes 3, vergleichbar sein. Hierbei werden vergleichbare Erntesituationen verwendet, um Änderungen an den Häckselmessern 8 festzustellen.

Die rechte untere Darstellung in Figur 2 zeigt beispielhaft, dass die Häckseleinrichtung 6 erfindungsgemäß ein lösbar am Trommelgehäuse 31 angeordnetes Verschleißblech 30 zum Schutz der induktiven Erfassungsanordnung 25 aufweist. Das Verschleißblech 30 kann lösbar an der Trommelrückwand 22 des Trommelgehäuses 31 angeordnet sein, wobei die induktive Erfassungsanordnung 25 lösbar an dem Verschleißblech 30 angeordnet ist.

Das Trommelgehäuse 31 weist eine Einströmöffnung 28 für den Erntegutstrom 5 und eine Ausströmöffnung 29 für den Erntegutstrom 5 auf. Ein Verschleißblech 30 und die dazugehörige induktive Erfassungsanordnung 25 sind vorderseitig an der Einströmöffnung 28 des Trommelgehäuses 31 angeordnet, sodass dieses Verschleißblech 30 und die induktive Erfassungsanordnung 25 leicht zugänglich sind, falls ein Austausch erforderlich sein sollte.

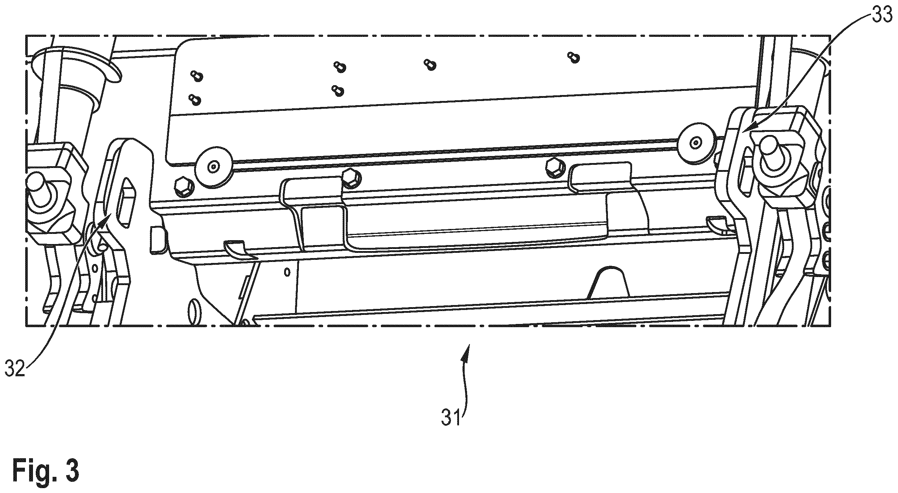

Die Fig. 3 zeigt einen vorderseitigen Teilbereich des Trommelgehäuses 31 ohne das Verschleißblech 30 und ohne die induktive Erfassungsanordnung 25. Das Trommelgehäuse 31 weist zwei voneinander beabstandete Einschiebenasen 32 und 33 auf. Diese Einschiebenasen 32, 33 sind bezüglich der Drehachse 20 der Häckseltrommel 7 voneinander beabstandet angeordnet.

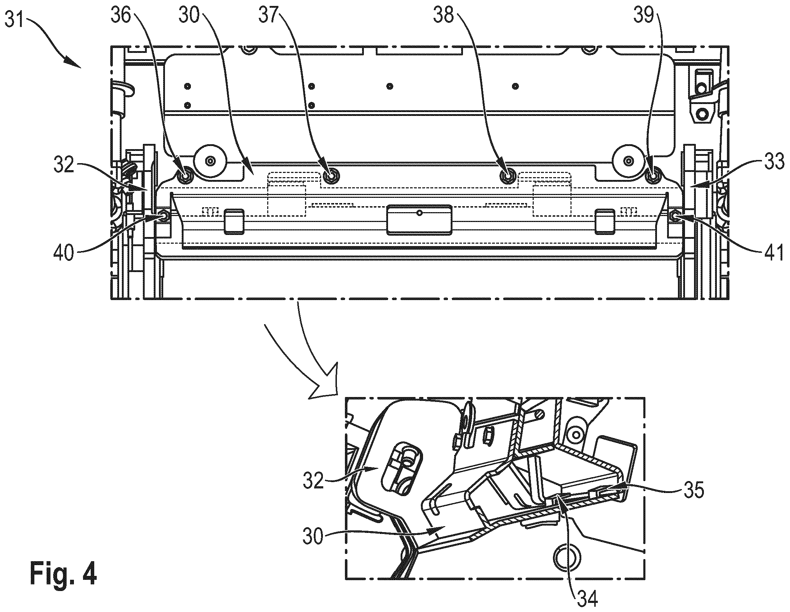

Die Fig. 4 zeigt den vorderseitigen Teilbereich des Trommelgehäuses 31 der Fig. 3, wobei das Verschleißblech 30 am Trommelgehäuses 31 ohne induktive Erfassungsanordnung 25 lösbar angebracht ist. Das Verschleißblech 30 weist mehrere Klemmnasen 34, 35 für eine spielfreie Fixierung des Verschleißblechs 30 am Trommelgehäuse 31 auf. Dieses Verschleißblech 30 wird mit mehreren Schrauben 36, 37, 38, 39 lösbar mit dem Trommelgehäuse 31 verbunden und weist wenigstens zwei Demontagegewinde 40, 41 auf.

Die Fig. 5 zeigt den vorderseitigen Teilbereich des Trommelgehäuses 31 der Fig. 4, wobei zwei Sensoranordnungen 23a, 23b jeweils eine induktive Erfassungsanordnung 25 ausbilden, die mittels dem Verschleißblech 30 spielfrei an der Trommelrückwand 22 des Trommelgehäuses 31 angeordnet ist.

Das Verschleißblech 30 wird somit zur Positionierung und Halterung der induktiven Sensoranordnungen 23a, 23b verwendet. Diese durch die Sensoranordnungen 23a, 23b ausgebildete induktive Erfassungsanordnung 25 kann mit mehreren Schrauben an dem Verschleißblech 30 montiert sein. Durch diese Fixierung der induktiven Erfassungsanordnung 25 auf dem Verschleißblech 30 und dessen unmittelbare Anordnung am Trommelgehäuse 31 wird die Einwirkung von äußeren Verformungen auf die induktive Erfassungsanordnung 25 reduziert. Die induktive Erfassungsanordnung 25 überwacht die Häckselmesser 8 der Häckseltrommel 7 somit möglichst dicht, spielfrei und vibrationsarm.

### Bezugszeichenliste

- 1: landwirtschaftliche Arbeitsmaschine
- 2: Selbstfahrender Feldhäcksler
- 3: Erntevorsatz
- 4: Einzugs- und Vorpresswalzen
- 5: Erntegutstrom
- 6: Häckseleinrichtung
- 7: Häckseltrommel
- 8: Häckselmesser
- 9: Häckselmesseranordnung a... b
- 10: Einzugsbereich
- 11: Gegenschneide
- 12: Cracker
- 13: Nachzerkleinerungseinrichtung
- 14: Nachbeschleunigungseinrichtung
- 15: Auswurfkrümmer
- 16: Auswurfkrümmerklappe
- 17: Messerschleifeinrichtung
- 18: Schleifstein
- 19: Einstellvorrichtung
- 20: Drehachse der Häckseltrommel
- 21: Trommelboden
- 22: Trommelrückwand
- 23: Sensoranordnung a...b
- 24: Schneidkante
- 25: induktive Erfassungsanordnung
- 26: magnetische Erregeranordnung
- 27: Polanordnung
- 28: Einströmöffnung
- 29: Ausströmöffnung
- 30: Verschleißblech
- 31: Trommelgehäuse
- 32: Einschiebenase
- 33: Einschiebenase
- 34: Klemmnase
- 35: Klemmnase
- 36: Schraube
- 37: Schraube
- 38: Schraube
- 39: Schraube
- 40: Demontagegewinde
- 41: Demontagegewinde

- 50: Anzeigeeinheit

## Patentansprüche

1. Selbstfahrender Feldhäcksler (2)
- mit einem Erntevorsatz (3) zur Aufnahme von Erntegut,
- mit einer Häckseleinrichtung (6) zum Zerkleinern des aufgenommenen Ernteguts, wobei die Häckseleinrichtung (6) ein Trommelgehäuse (31) aufweist, in dem eine Häckseltrommel (7) und mehrere Häckselmesser (8) angeordnet sind, wobei die Häckselmesser (8) lösbar mit der Häckseltrommel (7) verbunden sind, wobei an dem Trommelgehäuse (21, 22) eine Messerschleifeinrichtung (17) mit einem Schleifstein (18) zur Schleifung der Häckselmesser (8) ausgebildet ist,
- mit einer an der Häckseleinrichtung (6) angeordneten induktiven Erfassungsanordnung (25) zur Erfassung von Messwerten bezüglich der Häckselmesser (8),
- mit einer Einstellvorrichtung (19) zur Einstellung des Feldhäckslers (2), wobei die Einstellvorrichtung (19) kommunizierend mit der induktiven Erfassungsanordnung (25) verbunden ist,
**dadurch gekennzeichnet,**
- **dass** die Einstellvorrichtung (19) dazu vorgesehen und eingerichtet ist, aus den Messwerten der induktiven Erfassungsanordnung (25) unter Berücksichtigung einer Störgrößenkompensation einen Messerzustand der Häckselmesser (8) zu ermitteln.

2. Selbstfahrender Feldhäcksler (2) nach Anspruch 1,
**dadurch gekennzeichnet,**
**dass** die Störgrößenkompensation in Abhängigkeit sensorisch erfasster Störgrößen bezüglich der Häckseleinrichtung (6) erfolgt.

3. Selbstfahrender Feldhäcksler (2) nach einem der vorhergehenden Ansprüche,
**dadurch gekennzeichnet,**
**dass** die Störgröße, die bei der Ermittlung des Messerzustandes der Häckselmesser (8) kompensiert wird, eine Drehzahlschwankung der Häckseltrommel (7) der Häckseleinrichtung (6) ist.

4. Selbstfahrender Feldhäcksler (2) nach einem der vorhergehenden Ansprüche,
**dadurch gekennzeichnet,**
**dass** die Störgröße, die bei der Ermittlung des Messerzustandes der Häckselmesser (8) kompensiert wird, eine Verwindung der Häckseleinrichtung (6) ist.

5. Selbstfahrender Feldhäcksler (2) nach Anspruch 4,
**dadurch gekennzeichnet,**
**dass** die Verwindung der Häckseleinrichtung (6) eine Mitnahme von Häckselgut durch die Häckseltrommel (7) und/oder eine Umwickelung der Häckseltrommel (7), insbesondere der Häckselmesser (8), durch die Mitnahme des Häckselguts ist.

6. Selbstfahrender Feldhäcksler (2) nach einem der vorhergehenden Ansprüche,
**dadurch gekennzeichnet,**
**dass** die Störgröße, die bei der Ermittlung des Messerzustandes der Häckselmesser (8) kompensiert wird, eine Temperatur der Häckseleinrichtung (6), insbesondere innerhalb der Häckseleinrichtung (6), ist.

7. Selbstfahrender Feldhäcksler (2) nach einem der vorhergehenden Ansprüche,
**dadurch gekennzeichnet,**
**dass** die Störgröße, die bei der Ermittlung des Messerzustandes der Häckselmesser (8) kompensiert wird, eine Temperatur der Häckseltrommel (7) und/oder der Häckselmesser (8) ist.

8. Selbstfahrender Feldhäcksler (2) nach einem der vorhergehenden Ansprüche,
**dadurch gekennzeichnet,**
**dass** die Einstellvorrichtung (19) dazu vorgesehen und eingerichtet ist, für die Störgrößenkompensation aus mehreren Messwerten der induktiven Erfassungsanordnung (25) eine Kenngröße zu generieren, die eine reduzierte Abhängigkeit von den Störgrößen aufweist.

9. Selbstfahrender Feldhäcksler (2) nach einem der vorhergehenden Ansprüche,
**dadurch gekennzeichnet,**
**dass** die Einstellvorrichtung (19) dazu vorgesehen und eingerichtet ist, die Erfassung der Messwerte mittels der induktiven Erfassungsanordnung in vergleichbaren, insbesondere identischen, Betriebssituationen des selbstfahrenden Feldhäckslers (2) durchzuführen.

10. Selbstfahrender Feldhäcksler (2) nach einem der vorhergehenden Ansprüche,
**dadurch gekennzeichnet,**
**dass** die Häckseleinrichtung (6) ein lösbar angeordnetes Verschleißblech (30) zum Schutz der induktiven Erfassungsanordnung (25) aufweist.

11. Selbstfahrender Feldhäcksler (2) nach einem der vorhergehenden Ansprüche,
**dadurch gekennzeichnet,**
**dass** die Häckseleinrichtung (6) ein lösbar angeordnetes Verschleißblech (30) zur Positionierung und/oder Halterung der induktiven Erfassungsanordnung (25) aufweist.

12. Selbstfahrender Feldhäcksler (2) nach Anspruch 10 oder 11,
**dadurch gekennzeichnet,**
- **dass** das Trommelgehäuse (31) der Häckseleinrichtung (6) einen Trommelboden (21) und eine Trommelrückwand (22) aufweist,
- wobei das Verschleißblech (30) lösbar an der Trommelrückwand (22) angeordnet ist,
- wobei die induktive Erfassungsanordnung (25) lösbar an dem Verschleißblech (30) angeordnet ist.

13. Selbstfahrender Feldhäcksler (2) nach einem der Ansprüche 10 bis 12,
**dadurch gekennzeichnet,**
**dass** das Trommelgehäuse (31) zwei voneinander beabstandete Einschiebenasen (32, 33) und das Verschleißblech (30) mehrere Klemmnasen (34, 35) für eine spielfreie Fixierung des Verschleißblechs (30) am Trommelgehäuse (31) auf.

14. Selbstfahrender Feldhäcksler (2) nach einem der Ansprüche 10 bis 13,
**dadurch gekennzeichnet,**
**dass** das Verschleißblech (30) mit mehreren Schrauben (36, 37, 38, 39) lösbar mit dem Trommelgehäuse (31) verbunden ist, und/oder wenigstens ein Demontagegewinde (40, 41) aufweist.

15. Selbstfahrender Feldhäcksler (2) nach einem der Ansprüche 10 bis 14,
**dadurch gekennzeichnet,**
**dass** wenigstens zwei Sensoranordnungen (23a, 23b) mittels dem Verschleißblech (30) spielfrei an der Häckseleinrichtung (6) angeordnet sind, wobei die Sensoranordnungen (23a, 23b) jeweils eine induktive Erfassungsanordnung (25) ausbilden.
